**Europäisches Patentamt**

**European Patent Office**

**Office européen des brevets**

⑩

(11) Veröffentlichungsnummer: **0 244 722 B1**

(12) **EUROPÄISCHE PATENTSCHRIFT**

(45) Veröffentlichungstag der Patentschrift: **31.10.90**

(21) Anmeldenummer: **87106061.2**

(22) Anmeldetag: **25.04.87**

(51) Int. Cl.⁵: **C 04 B 11/02, C 04 B 11/032, C 04 B 11/26**

(54) Kontinuierliches Verfahren und Vorrichtung zur Gewinnung von industriell verwertbarem Gips aus Industrieabfallgips.

(30) Priorität: **09.05.86 DE 3615739**

(43) Veröffentlichungstag der Anmeldung:
**11.11.87 Patentblatt 87/46**

(45) Bekanntmachung des Hinweises auf die
Patenterteilung:
**31.10.90 Patentblatt 90/44**

(84) Benannte Vertragsstaaten:
**AT BE CH DE FR GB IT LI NL**

(56) Entgegenhaltungen:
**EP-A-0 110 128**
**DE-A-1 471 273**
**DE-C-3 114 363**

(73) Patentinhaber: **Jungbunzlauer Ladenburg GmbH**
**D-6802 Ladenburg (DE)**

(72) Erfinder: **Klötzer, Erhard, Dr.**
**Schauenburgstrasse 33**
**D-6901 Dossenheim (DE)**
Erfinder: **Fiand, Ulfert, Dr.**
**Beethoven Strasse 2**
**D-6900 Heidelberg (DE)**
Erfinder: **Walther, Hans,**
**Multring 19**
**D-6940 Weinheim (DE)**

(74) Vertreter: **Grussdorf, Jürgen, Dr. et al**
**Patentanwälte Zellentin & Partner**
**Rubensstrasse 30**
**D-6700 Ludwigshafen (DE)**

## Beschreibung

Gegenstand der vorliegenden Erfindung ist ein kontinuierliches Verfahren und eine Vorrichtung zur Gewinnung von industriell verwertbarem Gips aus Abfallgips durch hydrothermische Umwandlung von Abfallgips zu Calciumsulfat-α-Hemihydrat in einem Rohrreaktor.

Industrielle Abfallgipse, die z.B. bei der Phosphorsäureoder Citronensäureproduktion oder bei der Rauchgasentschwefelung anfallen, sind zumeist feinteilige, thixotrope Filterkuchen mit hohen Restfeuchten, welche in größeren Mengen sowohl anhaftende, interpartikuläre als auch eingeschlossene, intrapartikuläre Verunreinigungen enthalten. Die Entfernung der anhaftenden Verunreinigungen, z.B. durch Waschen, erweist sich als schwierig, da die feinteiligen Filterkuchen die Verunreinigungen, insbesondere die eingeschlossenen Verunreinigungen, hartnäckig festhalten. Selbst wenn durch Waschen mit erheblichen Wassermengen eine ausreichende Reinheit erzielt ist, lassen sich die so erhaltenen Produkte nur schlecht handhaben, da sie einerseits eine hohe Restfeuchtigkeit zurückhalten und andererseits durch die Verzahnung der feinen Gipsteilchen nur schwer zu verarbeiten sind. Es erweist sich daher als notwendig, diese Gipsprodukte in eine Form zu überführen, die dem Naturgips weitgehend entspricht, d.h. aus relativ gröberen Teilchen besteht und nur noch geringe anhaftende Feuchtigkeit enthält.

In der Literatur sind daher bereits mehrere Verfahren beschrieben, industriellen Abfallgips durch teilweise oder vollständige hydrothermale Umwandlung in Calcium-sulfat-α-Hemihydrat zu überführen und entweder das Hemihydrat direkt weiter zu verarbeiten oder durch Umsetzung mit einer ausreichenden Menge Wasser in ein grobkörniges Calciumsulfat-Dihydrat zu überführen, welches dann in gleicher Weise wie Naturgips weiterverarbeitet werden kann. Vorzugsweise werden diese Umsetzungen kontinuierlich, insbesondere in Rohrreaktoren durchgeführt.

Beispielsweise ist in der DE—PS 31 14 363 ein Verfahren zur Herstellung von faserartigem, zumindest teilweise zu sphärischen Teilchen geformtem Calciumsulfat-α-Hemihydrat durch hydrothermale Behandlung einer wässrigen Aufschlämmung von Calciumsulfat bekannt. Gipssuspension und zum Aufheizen dienender Heißdampf werden dabei von unten in ein senkrecht oder schräg stehendes Reaktionsrohr eingeführt. Nachteilig ist bei diesem Verfahren, daß nur relativ niedrig konzentrierte Suspensionen von 2 - 20 Gew. % Calciumsulfat verarbeitet werden können und zur Erzielung einer ausreichenden Durchmischung der zum Aufheizen dienende Dampf mittels eines statischen Mischers eingeführt werden muß. Bei Reaktionstemperaturen zwischen 110 und 160°C entsteht ein feinteiliges, faserartiges Produkt geringer Schüttdichte, welches bei höheren Produktkonzentrationen den Reaktor verstopft. Die dadurch notwendige geringe Feststoffkonzentration erfordert eine Abtrennung großer Mengen Wasser und bedingt eine geringe Raum-Zeitausbeute.

In der DE—OS 32 39 669 ist ein weiteres Verfahren zur hydrothermalen Umwandlung von Abfallgips in einem Rohrrektor bei Temperaturen von 130—180°C beschrieben, wobei anstelle des einen, aufsteigenden oder schrägliegenden Reaktionsrohres der DE—PS 31 14 363, ein System aus mehreren senkrechten, miteinander verbundenen Rohren verwendet wird, wobei Gipsmaische und Heißdampf im Gleichstrom am Fuß des ersten aufsteigenden Rohrzweiges eingeleitet und aus dem aufsteigenden Rohr unmittelbar in ein weiteres senkrecht nach unten führendes Rohr umgeleitet werden. Bei dieser Reaktionsführung können auch Gipskonzentrationen von 20—55% verarbeitet werden.

Obwohl durch diese Reaktionsführung eine weitgehende "Vergleichmäßigung der Kristallbildung und Vermeidung der Rücksedimentation und Prozeßunterbrechungen" erreicht wird, wird doch insbesondere bei längerer Verfahrensführung beobachtet, daß vor allem im ersten aufsteigenden Rohr sich Gipspartikel an der Wand anlagern oder größere Partikel aufgrund der Sedimentation langsamer wandern und durch Anlagerung von Hemihydrat so stark anwachsen, daß sich größere "Kiesel" bilden, die durch die Strömung nicht mehr mitgeführt werden können, so daß das Reaktionsrohr verstopfen kann. Höhere Strömungsgeschwindigkeiten, die diesen Effekten entgegenwirken, erfordern zur Erzielung der notwendigen Verweilzeit im Reaktor größere Rohrlängen, d.h. entweder eine größere Bauhöhe des Reaktors oder eine Vervielfältigung der Anzahl der Reaktorrohre, wodurch die Wirtschaftlichkeit der Anlage sinkt.

Es stellte sich daher die Aufgabe, die hydrothermale Umwandlung von Gips in einem Rohrrektor so zu verbessern, daß unter wirtschaftlichen Bedingungen Prozeßunterbrechungen durch Anlagerung von Gips an die Reaktorwand oder durch Sedimentationen nicht mehr auftreten und Gipssuspensionen höherer Konzentration verarbeitet werden können.

Überraschenderweise konnte diese Aufgabe dadurch gelöst werden, daß entgegen der Lehre der Literatur der Heißdampf nicht in die aufsteigende Gipssuspension eingeleitet, sondern in einen absteigenden Teil des Reaktors eingeführt wird.

Weitere Einzelheiten der Erfindung sind den Ansprüchen zu entnehmen.

In der einfachsten Form besteht die erfindungsgemäße Vorrichtung aus einem senkrechten Reaktionsrohr, an dessen Kopf Gipsmaische und Heißdampf zugeführt werden und an dessen Fuß die Hemihydratsuspension abgezogen wird. Um die Gipsmaische, die üblicherweise in Bodennähe hergestellt wird, an den Kopf des Reaktionsrohrs zu bringen, ist ein Steigrohr vorgesehen. Umgekehrt muß die Hemihydratsuspension vom Fuß des Reaktionsrohrs auf die Höhe der Filtereinrichtung transportiert werden, wozu ein weiteres Steigrohr vorgesehen ist. Die Vorrichtung besteht

2

daher vorzugsweise aus einem Rohrreaktor mit 3 senkrechtstehenden, in Reihe verbundenen Rohren, deren mittleres das eigentliche Reaktionsrohr darstellt, während die übrigen einen geringeren Durchmesser und daher auch eine höhere Strömungsgeschwindigkeit des Inhalts aufweisen.

Da in dem ersten aufsteigenden Rohr die Temperaturen zu einer hydrothermalen Umwandlung und daher Rekristallisation nicht ausreichen, findet insbesondere aufgrund der hohen Strömungsgeschwindigkeit hier weder ein Anbacken der Gipskristalle an der Wand noch eine Sedimentation und Kornvergrößerung statt. Da dieses Rohr vornehmlich zur Förderung der Gipssuspension zum Kopf des ersten Fallrohres dient, kann das Rohr auch entfallen, wenn Gipsvorratsgefäß und Speisepumpe sich bereits in Höhe des Kopfes des Fallrohres befinden. Die hydrothermale Umwandlung findet überwiegend in dem Fallrohr statt. Die für die gewünschte Reaktionszeit notwendige niedrige Strömungsgeschwindigkeit wird durch die größere Weite des Fallrohres erreicht. Auf Grund der Rohrweite stört auch ein Anbacken an der kälteren Rohrwand, das nur in geringem Maß geschieht, praktisch nicht. Kleinere Dihydratkörner werden nach dem Aufheizen relativ rasch gelöst und in α-Hemihydratkörner umgewandelt, welche beim weiteren Absinken wachsen. Andererseits werden große Körner rasch sedimentieren und dadurch in Zonen mit geringem Dihydratgehalt gelangen, wo sie sich unter hydrothermaler Umwandlung in α-Hemihydrat auflösen und nicht unter Anlagerung von Hemihydrat wachsen. Die das Fallrohr verlassenden relativ gleichförmigen Hemihydratkristalle werden im zweiten Steigrohr wiederum mit hoher Strömungsgeschwindigkeit bewegt, so daß eine Sedimentation und ein Ansetzen an der Wand nicht beobachtet wird. In diesem Steigrohr findet noch eine gewisse Nachreaktion statt, bevor die Hemihydratsuspension in an sich bekannter Weise entspannt und filtriert wird. Der Filterrückstand wird in bekannter Weise durch Waschen mit wasserfreiem Alkohol, insbesondere Methanol und/oder Trocknen in lagerfähiges α-Hemihydrat überführt oder durch Lagern des feuchten Filterkuchens in ein reines Calciumsulfat-Dihydrat überführt. Dieses Steigrohr kann auch entfallen, wenn die Filteranlage unterhalb des Fallrohres angeordnet ist. Das Fallrohr muß in diesem Fall natürlich so ausgelegt sein, daß der gewünschte Umsetzungsgrad erreicht wird.

Um die Bauhöhe zu verringern, bzw. die Reaktorlänge und damit die Verweilzeit der Suspension, d.h. die Reaktionszeit zu erhöhen, können auch mehrere Fallrohre größeren Durchmessers über Steigrohre geringeren Durchmessers hintereinandergeschlossen werden, beispielsweise zu einem Reaktor mit 5 oder 7 Rohren. Eine Heizung durch Einblasen von Dampf kann jeweils am Kopf der Fallrohre erfolgen, normalerweise wird jedoch nur im 1. Fallrohr Dampf zugeführt.

Das auf diese Weise erhaltene Calciumsulfat-α-Hemihydrat besteht überwiegend aus wenig miteinander verfilzten Kristallen einer Korngröße von unter 70 μm, welches direkt zur Weiterverarbeitung geeignet ist. Die aus diesem α-Hemihydrat bei der Weiterverarbeitung entstehenden Gipsprodukte weisen eine hervorragende Festigkeit von bis 60 N/mm² auf (Messung nach DIN 1168).

Wenn man dieses Hemihydrat mit der anhaftenden Restfeuchte zum Dihydrat weiterreagieren läßt, wozu normalerweise die Verweilzeit auf einem Transportband von der Filteranlage zur Weiterverarbeitung ausreicht, erhält man mehr oder weniger große, leicht zu brechende oder zu vermahlende Brocken von Calciumsulfat-Dihydrat, die aus agglomerierten, gut ausgebildeten Gips-Kristallen bestehen, welche ebenfalls eine Korngröße von überwiegend unter 70 μm besitzen, wobei das Produkt eine Restfeuchtigkeit von etwa 5—20% besitzt und entweder in diesem Zustand weiterverarbeitet werden kann oder auf übliche Weise nachgetrocknet wird.

Zur Durchführung des erfindungsgemäßen Verfahrens wird eine Gipssuspension in Wasser mit 20—55, vorzugsweise 40—50 Gew.% eingesetzt, die mit einer Temperatur von etwa 20—95°C, vorzugsweise 90—95°C in den Reaktor eingeführt wird. Durch Zuführung von Heißdampf in den absteigenden Strom der Gipssuspension wird die Temperatur auf 130—180°C, vorzugsweise 145—170°C gesteigert, bei Drücken von 2,5—10 bar.

Um bei der erfindungsgemäßen notwendigen Strömungsgeschwindigkeit von 0,01—0,1 m/s im Fallrohr eine ausreichende Verweilzeit für die Hydrothermalreaktion von etwa 3—20 min zu gewährleisten, sind Reaktorlängen von 3—20 m erforderlich. Reaktorlängen von 8—12 m werden bevorzugt, da sie eine ausreichende Reaktionszeit mit wirtschaftlicher Bauweise verbinden lassen.

Für eine wirtschaftliche Verfahrensweise ist es weiterhin vorteilhaft, den beim Entspannen der durchreagierten Suspension entstehenden Dampf zur Vorheizung der Gipsmaische zu verwenden. Der Dampf wird dabei entweder bei der Maischezubereitung oder in die Maischeführung zum Reaktor eingeleitet. Die beim Filtrieren des Hemihydrats anfallenden Filtrate und Waschwässer werden, soweit dies aufgrund der enthaltenden Verunreinigungen möglich ist, zur erneuten Suspension des Rohgipses verwendet. Soweit wie notwendig, kann in an sich bekannter Weise Frischwasser zugeführt werden.

Es hat sich weiterhin als besonders vorteilhaft erwiesen, den Heißdampf nicht über übliche Düsen in die Suspension einzuleiten, sondern im Zentrum des Reaktionsraumes eine spezielle "Rohrdüse" vorzusehen, aus dem der Dampf seitlich über feine Löcher austritt, nachdem er durch den das Rohr verschließenden Boden umgelenkt und zusätzlich verwirbelt ist. Die hohe Turbulenz des verwirbelten Dampfes zusammen mit der an dieser Stelle erhöhten Strömungsgeschwindigkeit, die durch die Verengung des Reaktionsrohres durch die eingesetzte Düse bewirkt wird, erzielen eine gute, gleichmäßige Durchmischung und Erwärmung der Gipssuspension an dieser Stelle. Durch eine konische bzw. kegelförmige Ausbildung des Bodens wird darüber hinaus erreicht, daß an dieser Stelle das Anwachsen der Gipskristalle weitgehend vermieden wird. Soweit aufgrund der überhitzten Rohrwandungen ein Anwachsen doch eintritt, kann die ganze Düse leicht ausgebaut und gereinigt werden.

In Figur 1 ist die erfindungsgemäße Vorrichtung schematisch dargestellt.

Figur 2 zeigt einen 3-Rohrrektor.

Figur 3 zeigt vergrößert den Aufbau der erfindungsgemäß bevorzugten "Rohrdüse".

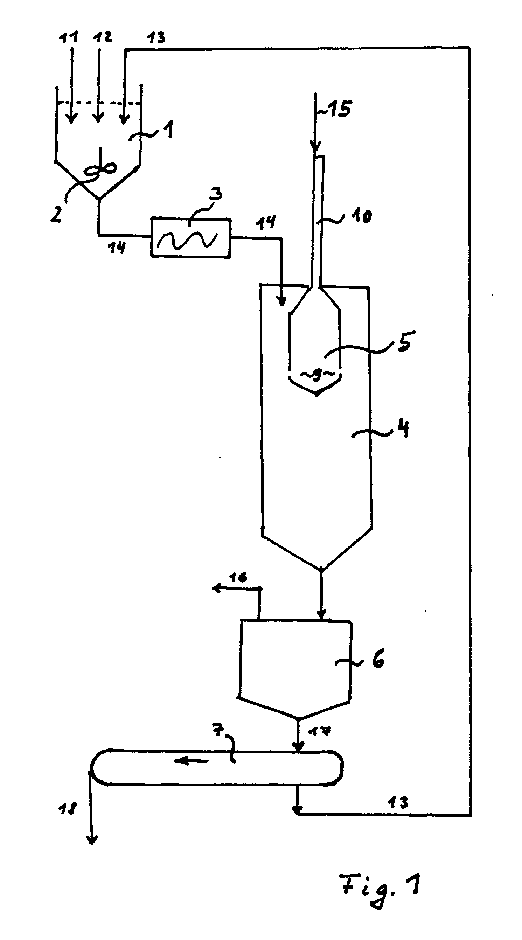

Im einzelnen zeigt die Figur 1 ein Mischgefäß 1 mit Rührer 2 zum Anrühren der Gipssuspension mit angedeuteten Zuleitungen für Gips, Frischwasser und Waschfiltrat und einer Ableitung für die Gipssuspension zur Druckpumpe 3, durch welche die Gipssuspension auf den nötigen Druck gebracht wird, um am Kopf in den Rohrreaktor 4 eingespeist zu werden. Am Kopf des Reaktors 4 ist ferner die Dampfzuführungsdüse 5 angebracht, durch welche Dampf zugeführt wird, um die Gipssuspension auf die Reaktionstemperatur von 130—180°C zu bringen. Die Reaktion findet während der Durchströmung des Rohres statt, worauf die Suspension vom Fuß desselben in das Entspannungsgefäß 6 überführt wird. Der in 6 entstehende Dampf wird abgeleitet und dient gegebenenfalls zur Vorheizung der Gipssuspension.

Die entspannte Gipssuspension wird auf den Filter 7 gebracht, an dessen Ende Hemihydrat oder Dihydrat je nach Verfahrensführung abgeworfen werden. Schematisch ist eine Leitung angedeutet, die das Filtrat wieder in das Mischgefäß 1 zurückführt.

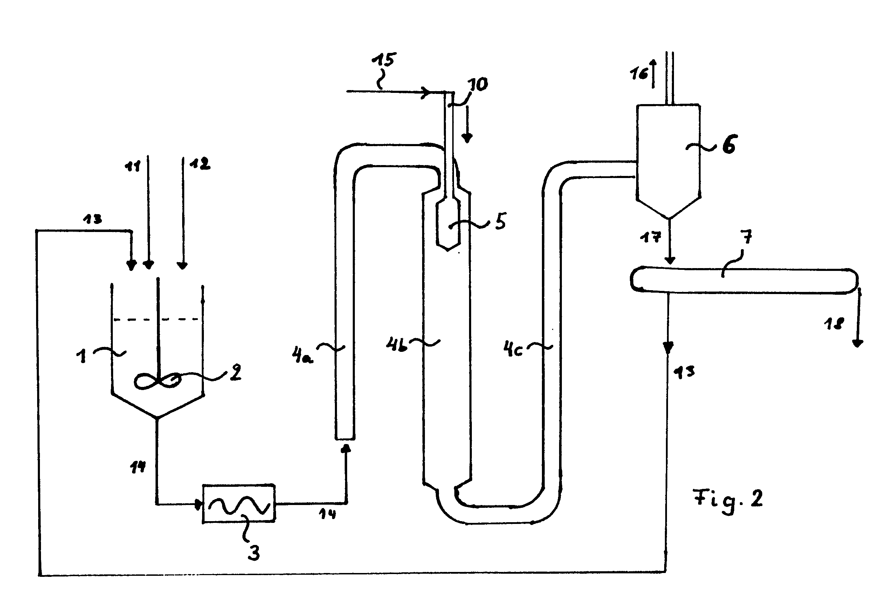

Figur 2 zeigt einen entsprechenden Rohrreaktor mit 3 Rohren 4a—4c, wobei 4a und 4c eng, 4b dagegen weiter dimensioniert ist, um die erfindungsgemäß bevorzugten Strömungsgeschwindigkeiten zu erzeugen.

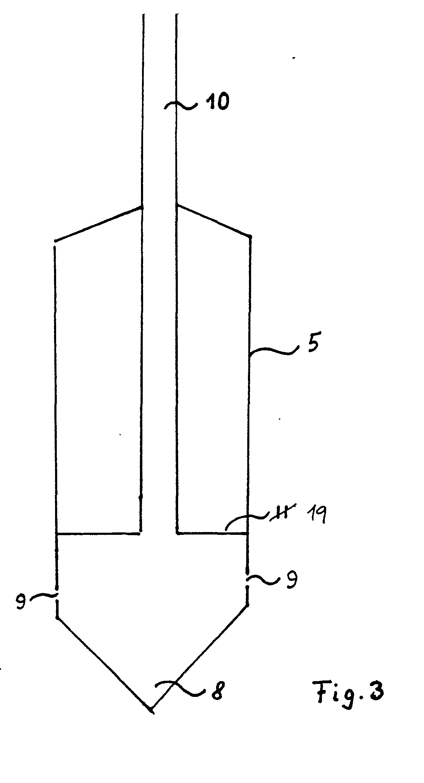

In der Figur 3 ist vergrößert die Rohrdüse 5 mit dem konischen Boden 8, den Dampfauslaßöffnungen 9, dem Dampfrohr 10 und der Dampfleitung 15 dargestellt. Obwohl nur zwei Dampföffnungen dargestellt sind, sind diese selbstverständlich um den ganzen Umfang des Rohres verteilt. Durchmesser und Zahl der Löcher können der gewünschten Dampfmenge und der gewünschten Verwirbelung beim Eintritt in die Maische angepaßt werden, wobei die Löcher auch versetzt oder in mehreren Reihen übereinander angeordnet sein können. Normalerweise sind Löcher mit einem Durchmesser von 1 bis 5 mm, vorzugsweise 2—3 mm, in Abständen von 2—10 mm um den ganzen Umfang des Rohres verteilt. Da durch die Rohrdüse eine erhöhte Strömungsgeschwindigkeit in dem Ringspalt zu dem Fallrohr 4b bewirkt werden soll, ist der Durchmesser der Rohrdüse vorzugsweise etwa 1/4 bis 2/3 des Durchmessers des Fallrohres 4b. Die Länge der Rohrdüse ist an sich unkritisch, da jedoch die Wandungen durch den Dampf erhitzt werden und dadurch auf der Außenwand eine Reaktion der Gipssuspension eintreten kann, hat es sich als vorteilhaft erwiesen, die Düse etwa ein-

bis zweimal so lang auszuführen wie der Durchmesser der Düse beträgt. Ferner kann es vorteilhaft sein, wie in der Figur 3 dargestellt, das Dampfrohr 10 bis in die Nähe der Auslaßöffnungen 9 zu führen und durch einen Zwischenboden 11 abzuschließen, so daß der obere Teil der Rohrdüse nicht erwärmt wird und eine zusätzliche Verwirbelung des Dampfes im unteren Teil erfolgt.

Bezugszeichenliste

1.) Mischgefäß für Gips und Wasser
2.) Rührvorrichtung
3.) Druckpumpe
4.) Reaktorrohr mit den Zweigen 4a-4c
5.) Dampfeinspritzdüse
6.) Entspannungsgefäß
7.) Filtervorrichtung
8.) Kanischer Dampfrohrboden
9.) Dampfauslaßöffnung
10.) Dampfrohr
11.) Gipszuführung
12.) Wasserzuführung
13.) Waschwasserleitung
14.) Maischeleitung
15.) Dampfleitung
16.) Dampfentspannungsleitung
17.) Hemihydratableitung
18.) Produktableitung
19.) Zwischenboden

**Patentansprüche**

1. Kontinuierliches Verfahren zur Gewinnung von industriell verwertbarem Gips aus Industrie-Abfallgips durch teilweise oder vollständige hydrothermale Umwandlung von Abfallgips zu Calciumsulfat-α-Hemihydrat in einem Rohrreaktor unter Verwendung von Dampf bei Temperaturen von 130—180°C, wobei Heißdampf im Gleichstrom mit der Gipssuspension in einem senkrechtstehenden Reaktorrohr geführt und durch Verweilzeiten von 3 bis 20 min. der Umsetzungsgrad gesteuert wird, dadurch gekennzeichnet, daß Gipssuspension und Heißdampf am Kopf des Reaktions-Rohres zugeführt werden und die Strömungsgeschwindigkeit 0,01—0,1 m/s, vorzugsweise 0,02—0,05 m/s beträgt und die Suspension des Umwandlungsproduktes am Fuß des Reaktions-Rohres abgezogen wird.

2. Verfahren nach Anspruch 1, dadurch gekennzeichnet, daß die Gipssuspension über ein Steigrohr zum Kopf des Reaktionsrohres geführt wird und in diesem Rohr eine Temperatur von 20—95°C und eine Strömungsgeschwindigkeit von 0,2—2 m/s, vorzugsweise 0,8—1,2 m/s besitzt.

3. Verfahren nach Anspruch 1 oder 2, dadurch gekennzeichnet, daß man die Suspension des Umwandlungsproduktes über ein Steigrohr zu einer Filteranlage (7) führt, wobei die Strömungsgeschwindigkeit 0,2—2 m/s, vorzugsweise 0,8—1,2 m/s beträgt.

4. Verfahren nach Anspruch 1—3, dadurch gekennzeichnet, daß man die Reaktion in einem Kreislaufreaktor aus senkrecht angeordneten und miteinander verbundenen Reaktorzweigen (4a—4c) durchführt, wobei die Gips-Suspension von unten in das erste Steigrohr (4a) und der Dampf von oben in das Fallrohr (4b) eingeführt wird und die α-Hemihydratsuspension teilweise in den Reaktor zurückgeführt wird.

5. Verfahren nach Anspruch 1—4, dadurch gekennzeichnet, daß eine Gips-Suspension mit einer Konzentration von etwa 20—55%, vorzugsweise 40—50% über ein Mischgefäß (1) und eine Druckpumpe (3) in den Reaktor (4) eingeführt und nach Verlassen des Reaktors (4) einem Entspannungsgefäß (6) zugeführt wird, wobei die entstehenden Brüden zur Vorheizung der Suspension in dem Mischgefäß (1) dienen, daß man die das Entspannungsgefäß (6) verlassende Suspension auf einem Filter (7) entwässert und entweder als Hemihydrat abzieht und trocknet oder mit einem zur Bildung von Calciumsulfat-Dihydrat ausreichenden Restwassergehalt im Filterkuchen auf einem Transportband unter Bildung von Calciumsulfat-Dihydrat aushärten läßt und als Bruchstücke abwirft.

6. Verfahren nach einem der Ansprüche 1—5, gekennzeichnet durch eine Eingangskonzentration der Gipssuspension von 20—55, vorzugsweise 40—50 Gew %, eine Reaktoreingangstemperatur der Suspension von 20—95°C, vorzugsweise 90—95°C, eine Reaktortemperatur im Fallrohr (4b) von 130—180°C, vorzugsweise von 145—170°C und Reaktor-Drücke von 2,5—10 bar.

7. Vorrichtung zur Durchführung des Verfahrens nach Anspruch 1—6, bestehend aus einem Mischgefäß (1) für die Gipsmaische, einer Druckpumpe (3), einem senkrechtstehenden Rohrreaktor (4), einer Dampfeinspritzdüse (5), einer Entspannungsvorrichtung (6) sowie einem Filter (7), dadurch gekennzeichnet, daß die Gipsmaische- und die Dampfeinleitung am Kopf und die Abnahmeleitung der Reaktionsprodukte am Fuß des Reaktionsrohrs (4) vorgesehen ist und Druckpumpe (3) und Rohrdurchmesser (4) so dimensioniert sind, daß eine Strömungsgeschwindigkeit der Gipsmaische von 0,01—0,1 m/s im Rohrreaktor (4) erreicht wird.

8. Vorrichtung nach Anspruch 7, bestehend aus einem Rohrrektor (4) mit mindestens drei senkrecht stehenden, in Reihe verbundenen Rohren (4a—4c), einem Mischgefäß (1) mit Abdampfzuführung, am Fuß von Rohr (4a) angeschlossener Druckpumpe (3), Dampfeinspritzdüse (5), sowie Entspannungsvorrichtung (6) und Filter (7) am Kopf des letzten Steigrohrs (4c), dadurch gekennzeichnet, daß die Dampfeinspritzdüse (5) sich am Kopf des Fallrohrs (4b) befindet und dieses einen 3—5 mal größeren Durchmesser hat als die übrigen Rohre.

9. Vorrichtung nach Anspruch 7 oder 8, dadurch gekennzeichnet, daß das Filter (7) eine Vorrichtung aufweist, durch die beim Abwurf des Filterkuchens die gewünschte Brockengröße eingestellt werden kann.

10. Vorrichtung nach einem der Ansprüche 7—9, dadurch gekennzeichnet, daß der Reaktor aus fünf Rohren besteht, deren erstes (4a) mit nach oben gerichteter Produktführung ausgelegt ist, die Dampfzuführung am Kopf des Fall-Rohrs (4b) erfolgt, die Produktentnahme am Kopf des fünften Rohres (4e) erfolgt und daß die U-förmige Verbindung zwischen drittem (4c) und viertem (4d) Rohr mit einer Entlüftung versehen ist.

11. Vorrichtung nach einem der Ansprüche 7—10, gekennzeichnet durch eine teilweise Produktrückführung, zur Durchführung des Verfahrens gemäß Anspruch 4, dadurch gekennzeichnet, daß vier senkrechte Zweige vorgesehen sind, wobei die ersten beiden (4a, 4b) und die letzten beiden (4c, 4d) kopfseitig, die mittleren (4b, 4c) fußseitig und die äußeren (4a, 4d) zur Herstellung eines Kreislaufes ebenfalls fußseitig über eine Kreislaufpumpe miteinander verbunden sind und daß der Produktabzug zum Entspannungsgefäß (6) am Kopf des dritten oder vierten Zweiges (4c oder d) angeordnet ist.

12. Vorrichtung gemäß einem der Ansprüche 7—11, dadurch gekennzeichnet, daß der Dampf durch eine Düse (5) zugeführt wird, die aus einem am Boden (8) mit einem kegelförmigen Boden verschlossenen Rohr besteht, welches in der Nähe des Bodens Löcher (9) mit einem Durchmesser von 1—5 mm zum Austritt des Dampfes besitzt, wobei der Rohrdurchmesser 1/4—2/3 des Durchmessers des ersten Fallrohrs (4b) beträgt.

13. Vorrichtung gemäß Anspruch 12, dadurch gekennzeichnet, daß die Düse über ein engeres Dampfrohr (10) mit einer Dampfleitung (15) in Verbindung steht und zur Reinigung der Vorrichtung leicht ausgebaut werden kann.

**Revendications**

1. Procédé continu de production de gypse industriellement utilisable à partir de gypse résiduaire par une transformation hydrothermique partielle ou complète du gypse résiduaire en semihydrate de sulfate de calcium dans un réacteur tubulaire, par utilisation de vapeur d'eau, à des températures de 130—180°C, de la vapeur d'eau chaude étant guidée en courant parallèle à la suspension de gypse dans un tube de réacteur en station verticale et le degré de réaction étant réglé par des durées de séjour de 3 à 20 minutes, caractérisé en ce qu'une suspension de gypse et de la vapeur d'eau chaude sont amenées au sommet du tube de réaction, en ce que la vitesse d'écoulement est de 0,01 à 0,1 m/sec., de préférence de 0,02 à 0,05 m/sec., et en ce que la suspension du produit de transformation est extraite au bas du tube de réaction.

2. Procédé suivant la revendication 1, caractérisé en ce que la suspension du gypse est guidée au sommet du tube de réaction par l'intermédiaire d'un tube ascendant et en ce que, dans ce tube, elle présente une température de 20 à 95°C et une vitesse d'écoulement de 0,2 à 2 m/sec., de préférence de 0,8 à 1,2 m/sec.

3. Procédé suivant l'une ou l'autre des revendications 1 et 2, caractérisé en ce qu'on guide la suspension du produit de transformation vers une installation de filtrage (7) par l'intermédiaire d'un tube ascendant, la vitesse d'écoulement étant de 0,2 à 2 m/sec., de préférence de 0,8 à 1,2 m/sec.

4. Procédé suivant l'une des revendications 1 à 3, caractérisé en ce qu'on effectue la réaction dans un réacteur de circulation constitué de branches de réacteur (4a - 4c) disposées verticalement et mutuellement reliées, la suspension de gypse étant introduite par le bas dans le premier tube ascendant (4a) et la vapeur étant introduite par le haut dansle tube de descente (4b), et en ce que la suspension de semihydrate α est partiellement recyclée dans le réacteur.

5. Procédé suivant l'une des revendications 1 à 4, caractérisé en ce qu'une suspension de gypse présentant une concentration d'environ 20 à 55%, de préférence de 40 à 50%, est introduite dans le réacteur (4) par l'intermédaire d'un récipient de mélange (1) et d'une pompe de compression (3) et est amenée à un récipient de détente (6) après abandon du réacteur (4), les fumées formées servant au préchauffage de la suspension dans le récipient de mélange (1), en ce qu'on déshydrate sur un filtre (7) la suspension quittant le récipient de détente (6) et en ce que soit on la prélève et sèche sous la forme d'un semihydrate, soit on la laisse durcir avec une teneur en eau résiduaire suffisante pour la formation dihydrate de sulfate de calcium dans le gâteau de filtration, sur une bande transporteuse, avec formation de dihydrate de sulfate de calcium, et on l'élimine sous la forme de fragments.

6. Procédé suivant l'une des revendications 1 à 5, caractérisé par une concentration de départ de la suspension de gypse de 20 à 55% en poids, de préférence de 40 à 50% en poids, une température d'entrée dans le réacteur de la suspension de 20 à 95°C, de préférence de 90 à 95°C, une température de réacteur dans le tube de descente (4b) de 130 à 180°C, de préférence de 145 à 170°C, et des pressions de réacteur de 2,5 à 10 bars.

7. Dispositif pour la mise en oeuvre du procédé suivant l'une des revendications 1 à 6, comprenant un récipient de mélange (1) pour la masse trempée de gypse, une pompe de compression (3), un réacteur tubulaire (4) en station debout, une tuyère d'injection de vapeur d'eau (5), un dispositif de détente (6) ainsi qu'un filtre (7), caractérisé en ce que le conduit d'entrée de masse trempée de gypse et le conduit d'entrée de vapeur d'eau sont prévus au sommet du tube réactionnel (4) et le conduit de sortie des produits réactionnels au bas du tube réactionnel (4) et en ce que la pompe de compression (3) et le diamètre de tube (4) sont dimensionnés de façon à obtenir une vitesse d'écoulement de la masse trempée de gypse de 0,01 à 0,1 m/sec., dans le réacteur tubulaire (4).

8. Dispositif suivant la revendication 7, comprenant un réacteur tubulaire (4) ayant au moins 3 tubes (4a—4c) reliés en série et en station verticale, un récipient de mélange (1) avec une amenée de vapeur résiduaire, une pompe de compression (3) raccordée au bas du tube (4a), une tuyère d'injection de vapeur (5) ainsi qu'un dispositif de détente (6) et un filtre (7) au sommet du dernier tube ascendant (4c), caractérisé en ce que la tuyère d'injection de vapeur (5) se trouve au sommet du tube de descente (4b) et en ce que celui-ci présente un diamètre 3 à 5 fois plus grand que les autres tubes.

9. Dispositif suivant l'une des revendications 7 et 8, caractérisé en ce que le filtre (7) présente un dispositif par lequel la grandeur souhaitée des fragments peut être ajustée lors de l'élimination du gâteau de filtration.

10. Dispositif suivant l'une des revendications 7 à 9, caractérisé en ce que le réacteur est constitué de 5 tubes dont le premier (4a) est conçu avec un guidage du produit dirigé vers le haut, en ce que l'amenée de vapeur d'eau s'effectue au sommet du tube de descente (4b), en ce que le prélèvement de produit a lieu au sommet du cinquième tube (4e), et en ce que la liaison en forme de U entre le troisième tube (4c) et le quatrième tube (4d) est pourvue d'une désaération.

11. Dispositif suivant l'une des revendications 7 à 10, caractérisé par un recyclage partiel du produit, pour la mise en oeuvre du procédé selon la revendication 4, dispositif caractérisé en ce que quatre branches verticales sont prévues, les deux premières (4a, 4b) et les deux dernières (4c, 4d) étant mutuellement reliées au sommet, les centrales (4b, 4c) à la base et les extérieures (4a, 4d) également à la base pour la réalisation d'un circuit, par l'intermédiaire d'une pompe de circulation, et en ce que l'évacuation de produit vers le récipient de détente (6) est agencé au sommet de la troisième ou de la quatrième branche (4c ou d).

12. Dispositif suivant l'une des revendications 7 à 11, caractérisé en ce que la vapeur est amenée par une tuyère (5) constituée d'un tube qui est fermé au fond (8) par un fond de forme conique et qui présente à proximité du fond des trous (9) ayant un diamètre de 1 à 5 mm pour la sortie de la vapeur, le diamètre de tube étant de 1/4 à 2/3 du diamètre du premier tube de descente (4b).

13. Dispositif suivant la revendication 12, caractérisé en ce que la tuyère est en communication avec un conduit à vapeur (15) par l'intermédiaire d'un tube à vapeur plus étroit (10) et en ce qu'elle peut être aisément démontée pour le nettoyage du dispositif.

**Claims**

1. Continuous process for the obtaining of industrially usable gypsum from industrial waste gypsum by partial or complete hydrothermal conversion of waste gypsum to calcium sulphate α-hemihydrate in a tube reactor with the use of steam at temperatures of 130—180°C., whereby hot steam is passed in co-current with the gypsum suspension into a vertically standing reactor tube and, by means of residence times of 3 to 20 min., the degree of reaction is controlled, characterised in that gypsum suspension and hot steam are introduced at the head of the reaction tube and the rate of flow amounts to 0.01—0.1 m/ s, preferably 0.02—0.05 m/s and the suspension of the conversion product is withdrawn at the foot of the reaction tube.

2. Process according to claim 1, characterised in that the gypsum suspension is passed via an ascending tube to the head of the reaction tube and, in this tube, possesses a temperature of 20—95°C. and a rate of flow of 0.2—2 m/s, preferably of 0.8—1.2 m/s.

3. Process according to claim 1 or 2, characterised in that one leads the suspension of the conversion product, via an ascending pipe, to a filter plant (7), whereby the rate of flow amounts to 0.2—2 m/s, preferably 0.8—1.2 m/s.

4. Process according to claims 1—3, characterised in that one carries out the reaction in a circulating reactor of vertically arranged reactor branches (4a—4c) connected with one another, whereby the gypsum suspension is introduced from below into the first ascending tube (4a) and the steam from above into the downpipe (4b) and the α-hemihydrate suspension is partially returned to the reactor.

5. Process according to claims 1—4, characterised in that a gypsum suspension with a concentration of about 20—55%, preferably of 40—50%, is introduced via a mixing vessel (1) and a pressure pump (3) into the reactor and, after leaving the reactor (4), is passed to a decompression vessel (6), whereby the resultant vapours serve for the preheating of the suspension in the mixing vessel (1), that one dehydrates the suspension leaving the decompression vessel (6) on a filter (7) and either draws off and dries as hemihydrate or allows to harden with a residual water content in the filter cake sufficient for the formation of calcium sulphate dihydrate on a transport belt and discharges as lumps.

6. Process according to one of claims 1—5, characterised by an initial concentration of the gypsum suspension of 20—55, preferably 40—50 wt.%, a reactor inlet temperature of the suspension of 20—95°C., preferably 90—95°C., a reactor temperature in the downpipe (4b) of 130—180°C., preferably of 145—170°C., and reactor pressures of 2.5—10 bar.

7. Device for the carrying out of the process according to claims 1—6, consisting of a mixing vessel (1) for the gypsum mash, a pressure pump (3), a vertically-standing tube reactor (4), a steam injection nozzle (5), a decompression device (6), as well as a filter (7), characterised in that the gypsum mash and the steam inlet is provided at the head and the take-off pipe of the reaction product at the foot of the reaction tube (4) and pressure pump (3) and the tube diameter (4) are so dimensioned that there is achieved a rate of flow of the gypsum mash of 0.01—0.1 m/s in the tube reactor (4).

8. Device according to claim 7, consisting of a tube reactor (4) with at least three tubes (4a—4c) connected in series, a mixing vessel (1) with exhaust steam inlet, pressure pump (3) attached at the foot of the tube (4a), steam injection nozzle (5), as well as decompression device (6) and filter (7) at the head of the last ascending tube (4c), characterised in that the steam injection nozzle (5) is present on the head of the downpipe (4b) and this has a diameter 3—5 times greater than that of the other tubes.

9. Device according to claim 7 or 8, characterised in that the filter (7) has a device by means of which, in the case of ejection of the filter cake, the desired lump size can be adjusted.

10. Device according to one of claims 7—9, characterised in that the reactor consists of five tubes, the first (4a) of which is designed with upwardly directed product guiding the steam inlet takes place, on the head of the downpipe (4b), the product removal takes place at the head of the fifth tube (4e) and that the U-shaped connection between the third (4c) and the fourth (4d) tube is provided with a vent.

11. Device according to one of claims 7—10, characterised by a partial product recycling for the carrying out of the process according to claim 4, characterised in that four vertical branches are provided, whereby the first two (4a, 4b) and the last two (4c, 4d) are connected together on the head side, the middle ones (4b, 4c) on the foot side and the outer ones (4a, 4d), for the production of a circulation, also on the foot side via a circulating pump and that the product removal to the decompression vessel (6) is arranged on the head of the third or fourth branch (4c or d).

12. Device according to one of claims 7—11, characterised in that the steam is introduced through a nozzle (5), which consists of a tube closed on the bottom (8) with a conically-shaped bottom, which possesses, in the region of the bottom, holes (9) with a diameter of 1—5 mm. for the outlet of the steam, whereby the tube diameter amounts to 1/4 to 2/3 of the diameter of the first downpipe (4b).

13. Device according to claim 12, characterised in that the nozzle is in connection, via a narrower steam pipe (10), with a steam pipe (15) and can easily be dismantled for the cleaning of the device.

Fig. 1

Fig. 2

EP 0 244 722 B1

Fig. 3